# EUROPEAN PATENT APPLICATION

(11) **EP 3 633 586 A1**
(43) Date of publication of application: **08.04.2020**
(21) Application number: 17911534.0
(22) Date of filing: 29.05.2017
(51) Int. Cl.: G06Q 40/04

(54) **STOCK PRICE ANALYSIS DEVICE**

(71) Applicant: Nomura Research Institute, Ltd., Tokyo 100-0004 (JP)
(72) Inventor: TAKEUCHI, Hajime, Tokyo 100-0004 (JP)
(74) Representative: Hoffmann Eitle
(86) International application number: PCT/JP2017/019943
(87) International publication number: WO 2018/220685

(57) **Abstract**

A stock price analysis device of the present invention reads the probability of both the rise and fall in stock prices from information regarding stock prices and predicts future transitions in stock prices. A stock price analysis device (10) includes: an acquisition unit (11) that acquires information regarding a stock price; a first calculation unit (12a) that calculates a future degree of rise in a stock price on the basis of a first function that is trained to output values different between a case where information regarding a stock price of a first group that has risen during a predetermined period has been input and a case where information regarding a stock price of a second group that has fallen during the predetermined period has been input; a second calculation unit (12b) that calculates a future degree of fall in the stock price on the basis of a second function that is trained to output values different between the case where the information regarding the stock price of the first group has been input and the case where the information regarding the stock price of the second group has been input and that is trained to have a dependency different from a dependency of the first function with respect to the information regarding the stock price of the first group and the information regarding the stock price of the second group; and a third calculation unit (12c) that combines the degree of rise and the degree of fall and outputs a score that predicts future transition of the stock price.

## Description

### Technical Field

The present invention relates to a stock price analysis device.

### Background Art

In the past, future transitions of stock prices of a corporation have been predicted on the basis of financial information and news information regarding the corporation. Predictions of future transitions of stock prices have been performed as predictions of the probability of a rise in the stock price or predictions of the probability of a fall in the stock price.

For example, Patent Literature 1 discloses an investment determination support information providing device that, on the basis of statistical information obtained by statistical processing of a relationship between articles and stock price fluctuations for individual corporations as well as article data related to the corporation, adds information for supporting a determination regarding stock investments to the article data.

### Citation List

### Patent Literature

Patent Literature 1: JP 2005-100221 A

### Summary of Invention

### Technical Problem

In the case of predicting future transitions of stock prices on the basis of information regarding stock prices, a relationship between transitions of stock prices recorded in the past and information that could influence stock prices is analyzed. In a case where information similar to the information recorded in the past is acquired, the future transition of the stock price might be predicted on the basis of hypothesis that the stock price will change in a similar manner as the transition recorded in the past.

However, even in a case where information similar to information recorded in the past is acquired, the stock price would not necessarily change in a similar manner as the transition recorded in the past. For example, even in a case where information suggesting, at a glance, a rise in a stock price is acquired, the information might be different from the fact or might be information that indicates an excessive rise in stock prices.

Therefore, an object of the present invention is to provide a stock price analysis device that reads the probability of both a rise and a fall in a stock price from information regarding the stock price and that predicts future transition of the stock price.

### Solution to Problem

A stock price analysis device according to an aspect of the present invention includes: an acquisition unit that acquires information regarding a stock price; a first calculation unit that calculates a future degree of rise in a stock price on the basis of a first function that is trained to output values different between a case where information regarding a stock price of a first group that has risen during a predetermined period has been input and a case where information regarding a stock price of a second group that has fallen during the predetermined period has been input; a second calculation unit that calculates a future degree of fall in the stock price on the basis of a second function that is trained to output values different between the case where the information regarding the stock price of the first group has been input and the case where the information regarding the stock price of the second group has been input and that is trained to have a dependency different from a dependency of the first function with respect to the information regarding the stock price of the first group and the information regarding the stock price of the second group; and a third calculation unit that combines the degree of rise and the degree of fall and outputs a score that predicts a future transition of the stock price.

According to this aspect, the first calculation unit calculates the degree of rise in the stock price from the information regarding the stock price, the second calculation unit calculates the degree of fall in the stock price from the information regarding the stock price, and then combining the calculation results to calculate a score makes it possible to read the probability of both the rise and fall in the stock price from the information regarding the stock price, enabling prediction of the future transition of the stock price.

In the aspect described above, it is allowable to configure the stock price analysis device such that the acquisition unit acquires numerical information and text information regarding the stock price, the stock price analysis device further includes a classification unit that classifies the text information obtained by the acquisition unit into text information of a first group and text information of a second group using a classifier that is trained on the basis of the text information regarding the stock price of the first group and the text information regarding the stock price of the second group, the first calculation unit calculates the degree of rise by inputting, to the first function, a value that quantifies text information on the basis of classification results from the classifier, and the second calculation unit calculates the degree of fall by inputting, to the second function, a value that quantifies text information on the basis of classification results from the classifier.

According to this aspect, it is possible to predict a transition of a future stock price on the basis of more diverse information, by quantifying text information regarding the stock price and inputting the quantified information, together with numerical information regarding the stock price, to the first function and the second function.

In the aspect described above, the classification unit may classifies text information obtained by the acquisition unit using a classifier that is trained to classify text information regarding the stock price of the first group recorded in the past into text information of the first group and that is trained to classify text information regarding the stock price of the second group recorded in the past into the text information of the second group.

According to this aspect, it is possible to correctly evaluate an influence on the stock price suggested by text information by training the classifier to classify text information regarding the stock price of the first group into text information of the first group and to classify text information regarding the stock price of the second group into text information of the second group, regardless of the content of the text information.

In the aspect described above, the classification unit may classify the text information using the classifier trained on the basis of text information regarding the stock price of the first group and text information regarding the stock price of the second group recorded in the past prior to a timing when a relatively large fluctuation as compared to a past stock price transition occurred, for the stock price of the first group and the stock price of the second group.

According to this aspect, specifying the event occurrence date by the timing when a relatively large fluctuation as compared to the past stock price transition occurred and training the classifier using the text information recorded on or before the event occurrence date will make it possible to determine, with high accuracy, whether the text information is to be classified into the first group or the second group.

In the aspect described above, the numerical information may include financial information regarding the stock price, the text information may include at least one of news information regarding the stock price or reputation information regarding the stock price, and the third calculation unit may calculate the score that corresponds to one of the news information, the financial information, or the reputation information.

According to this aspect, the future transition of the stock price can be predicted from a plurality of different viewpoints by calculating a plurality of scores corresponding to a plurality of information sources.

### Advantageous Effects of Invention

According to the present invention, there is provided a stock price analysis device that reads the probability of both the rise and fall in stock prices from information regarding stock prices and that predicts future transitions in stock prices.

### Brief Description of Drawings

Fig. 1 is a diagram illustrating a network configuration of a stock price analysis device according to an embodiment of the present invention.
Fig. 2 is a diagram illustrating a physical configuration of a stock price analysis device according to an embodiment of the present invention.
Fig. 3 is a functional block diagram of a stock price analysis device according to an embodiment of the present invention.
Fig. 4 is a flowchart of score calculation processing executed by a stock price analysis device according to an embodiment of the present invention.
Fig. 5 is a flowchart of classifier learning processing executed by a stock price analysis device according to an embodiment of the present invention.
Fig. 6 is a flowchart of first function and second function learning processing executed by a stock price analysis device according to an embodiment of the present invention.
Fig. 7 is a graph indicating transitions in scores and stock prices calculated by a stock price analysis device according to an embodiment of the present invention.
Fig. 8 is a flowchart of leading degree calculation processing executed by a stock price analysis device according to an embodiment of the present invention.

### Description of Embodiments

Embodiments of the present invention will be described with reference to the accompanying drawings. Note that components, in each of the drawings, with the same reference sign have a same or similar configuration.

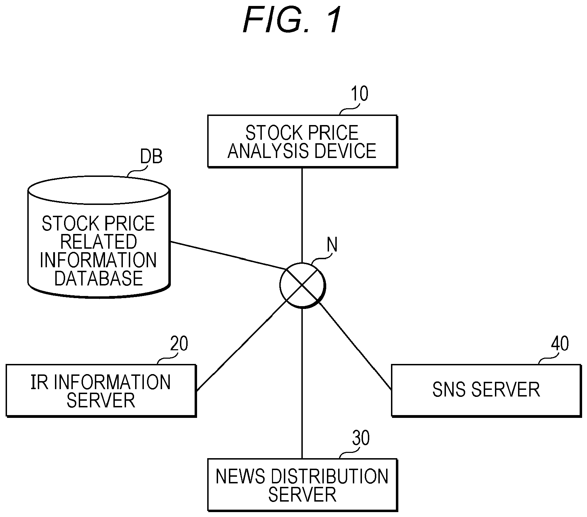

Fig. 1 is a diagram illustrating a network configuration of a stock price analysis device 10 according to an embodiment of the present invention. The stock price analysis device 10 according to the present embodiment is connected to an investor relations (IR) information server 20, a news distribution server 30, a social networking service (SNS) server 40, and a stock price related information database DB, via a communication network N. The stock price analysis device 10 calculates a score predicting the future transition of the stock price on the basis of information regarding the stock price acquired from the IR information server 20, the news distribution server 30, the SNS server 40, and the stock price related information database DB. Fig. 1 illustrates one IR information server 20, one news distribution server 30, one SNS server 40 and one stock price related information database DB. However, it is also allowable to have a plurality of IR information servers 20, news distribution servers 30, SNS servers 40, and the stock price related information databases DB to be connected to the communication network N.

The communication network N is a wired or wireless communication network, and may be the Internet, for example. The IR information server 20 is a server that discloses corporate IR information. IR information is bulletin information for investors and includes financial information regarding quarterly financial results, information regarding corporate management policies, or the like. The news distribution server 30 is a server that distributes news information regarding stock prices. The news information regarding the stock prices includes news related to corporate management and news related to business performance. Note that news information sometimes includes IR information, with a difference that IR information is distributed from corporations, whereas news information is distributed from news agencies.

The SNS server 40 is a server that provides information regarding data posted by SNS users. The stock price analysis device 10 can acquire information regarding posted data from the SNS server 40 by using an application program interface (API), for example. More specifically, the stock price analysis device 10 can acquire post data including specific keywords related to the stock price, from the SNS server 40, for example. The posted data acquired includes reputation information regarding stock prices, for example. The reputation information regarding stock prices includes rumors about stock prices, personal views, or the like. The stock price related information database DB is a database that stores stock prices recorded in the past together with IR information, news information, and reputation information regarding stock prices.

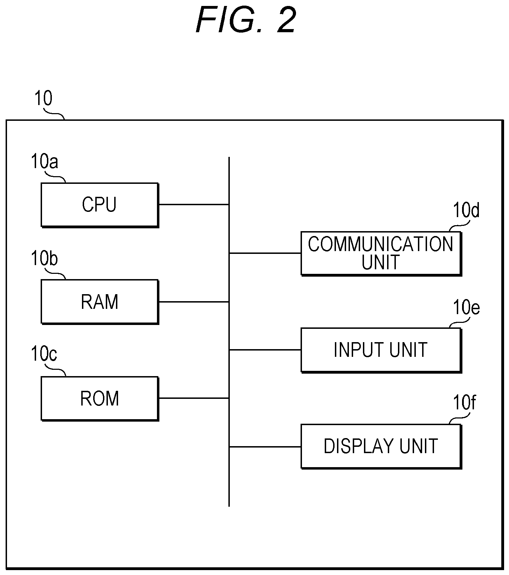

Fig. 2 is a diagram illustrating a physical configuration of the stock price analysis device 10 according to an embodiment of the present invention. The stock price analysis device 10 includes a central processing unit (CPU) 10a corresponding to a hardware processor, random access memory (RAM) 10b corresponding to memory, read only memory (ROM) 10c corresponding to memory, a communication unit 10d, an input unit 10e, and a display unit 10f. These components are connected to each other via a bus so as to enable mutual data transmission and reception.

The CPU 10a is a control unit that performs control related to execution of a program stored in the RAM 10b or the ROM 10c, and that performs calculation and processing of data. The CPU 10a is an arithmetic device that executes a program related to stock price analysis (stock price analysis program). The CPU 10a receives various input data from the input unit 10e and the communication unit 10d, and displays calculation results of the input data on the display unit 10f or stores the results in the RAM 10b or the ROM 10c.

The RAM 10b is a data rewritable storage, and is implemented by a semiconductor storage element, for example. The RAM 10b stores programs such as applications executed by the CPU 10a, and data.

The ROM 10c is a data-read only storage, and is implemented by a semiconductor storage element, for example. The ROM 10c stores programs such as firmware, and data, for example.

The communication unit 10d is an interface that connects the stock price analysis device 10 to the communication network N. For example, the communication unit 10d is connected to the communication network N implemented by a wired or wireless data transmission channel, such as a local area network (LAN), a wide area network (WAN), or the Internet.

The input unit 10e receives data input from the user, and includes a keyboard, a mouse, and a touch panel, for example.

The display unit 10f visually displays the calculation result made by the CPU 10a, and is implemented by a liquid crystal display (LCD), for example.

The stock price analysis program may be provided by being stored in a computer-readable storage medium such as the RAM 10b or the ROM 10c, or may be provided via a communication network connected by the communication unit 10d. In the stock price analysis device 10, the CPU 10a executes a stock price analysis program, thereby implementing various functions as described with reference to the following diagram. In addition, these physical configurations are merely illustrative, and they need not be independent configurations. For example, the stock price analysis device 10 may include large-scale integration (LSI) integrating the CPU 10a, the RAM 10b, and the ROM 10c.

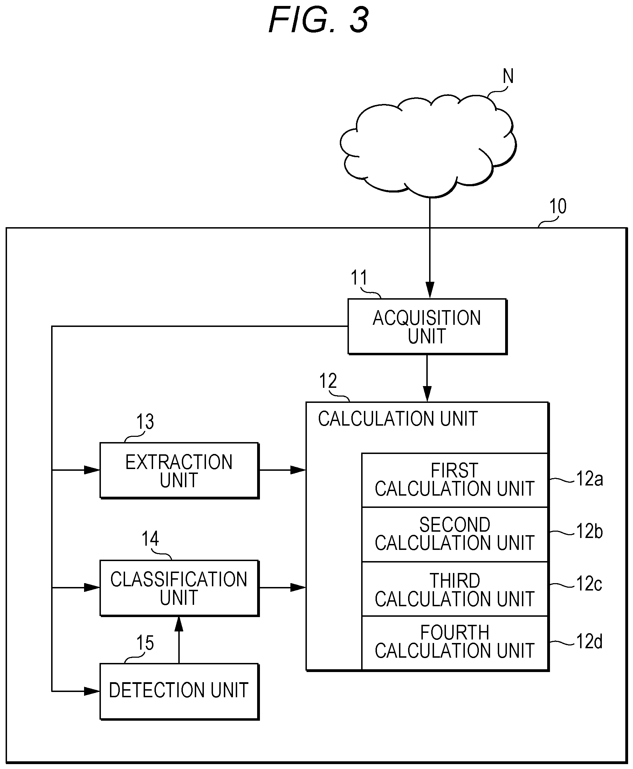

Fig. 3 is a functional block diagram of the stock price analysis device 10 according to an embodiment of the present invention. The stock price analysis device 10 includes an acquisition unit 11, a calculation unit 12, an extraction unit 13, a classification unit 14, and a detection unit 15.

The acquisition unit 11 acquires information regarding stock prices. Here, information regarding stock prices refers to not only information regarding a specific stock, but also information that can influence the market, such as information regarding stock indices and information regarding the entire industry. The acquisition unit 11 may acquire numerical information and text information regarding the stock price. Here, the numerical information may include financial information regarding stock prices, and the text information may include at least one of news information regarding stock prices or reputation information regarding stock prices. The acquisition unit 11 may acquire financial information from the IR information server 20 via the communication network N, acquire news information from the news distribution server 30, and acquire reputation information from the SNS server 40. Furthermore, the acquisition unit 11 may acquire information regarding stock prices recorded in the past from the stock price related information database DB.

The calculation unit 12 includes a first calculation unit 12a, a second calculation unit 12b, a third calculation unit 12c, and a fourth calculation unit 12d. The first calculation unit 12a calculates the future degree of rise in a stock price on the basis of a first function that is trained to output values different between a case where information regarding the stock price of a first group that has risen during a predetermined period has been input and a case where information regarding the stock price of a second group that has fallen during a predetermined period has been input. Here, the degree of rise is an amount obtained by quantifying the probability of a rise in the stock price in the future. The first function will be described in detail below. Furthermore, the predetermined period can be set to any period, for example, one year.

The second calculation unit 12b calculates the future degree of fall in a stock price on the basis of a second function that is trained to output values different between a case where information regarding the stock price of the first group has been input and a case where information regarding the stock price of the second group has been input, and that is trained to have a dependency different from a dependency of the first function with respect to the information regarding the stock price of the first group and the information regarding the stock price of the second group. More specifically, the second calculation unit 12b calculates the future degree of fall in a stock price on the basis of the second function that is trained to have a dependency opposite to a dependency of the first function with respect to the information regarding the stock price of the first group and the information regarding the stock price of the second group. Here, the degree of fall is an amount obtained by quantifying the probability that the stock price will fall in the future. The second function will be described in detail below.

The third calculation unit 12c combines the future degrees of rise and fall in a stock price and thereby calculates a score that predicts the future transition of the stock price. More specifically, the third calculation unit 12c calculates the score on the basis of the difference between the future degrees of rise and fall in the stock price. The third calculation unit 12c may also calculate a score corresponding to one of financial information, news information, or reputation information. That is, the third calculation unit 12c may calculate a plurality of types of scores corresponding to different information sources.

The fourth calculation unit 12d calculates a leading degree of a score with respect to the stock price. The leading degree is a value indicating how many days the score precedes the stock price. The leading degree will be described below in detail.

The extraction unit 13 extracts a stock of a first group from among stocks having a high rate of change in price, and a stock of a second group from among stocks having a low rate of change, from among a plurality of stock prices recorded in a predetermined period. The extraction unit 13 may extract a formula of the first group from among stocks having a high rate of change with 1σ (1 standard deviation) or above and having higher volatility. Here, the standard deviation of the rate of change may be the standard deviation of the rate of change distribution regarding the all listed stocks. Furthermore, the extraction unit 13 may extract a stock of the second group from among stocks having a low rate of change in price with -1σ (-1 standard deviation) or below and having higher volatility. In the description herein, the price of the stock of the first group is referred to as a stock price of the first group, and the price of the stock of the second group is referred to as a stock price of the second group.

The classification unit 14 uses a classifier trained on the basis of the text information regarding the stock price of the first group and the text information regarding the stock price of the second group, and thereby classifies the text information acquired by the acquisition unit 11 into text information of the first group and text information of the second group. Here, the text information of the first group represents text information determined to suggest a rise in the stock price, while the text information of the second group represents text information determined to indicate a fall in the stock price. The classification unit 14 may classify the text information acquired by the acquisition unit 11 using the classifier that is trained to classify the text information regarding the stock price of the first group recorded in the past into the text information of the first group and trained to classify the text information regarding the stock price of the second group recorded in the past into the text information of the second group.

The first calculation unit 12a inputs, to the first function, a value obtained by quantifying the text information on the basis of the classification result from the classification unit 14, and calculates the degree of rise. More specifically, the first calculation unit 12a inputs, to the first function, a value obtained by quantifying the text information according to the ratio of the text information of the first group to the whole and the ratio of the text information of the second group to the whole, and calculates the degree of rise. In addition, the second calculation unit 12b inputs, to the second function, a value obtained by quantifying the text information on the basis of the classification result from the classification unit 14, and calculates the degree of fall. More specifically, the second calculation unit 12b inputs, to the second function, a value obtained by quantifying the text information according to the ratio of the text information of the first group to the whole and the ratio of the text information of the second group to the whole, and calculates the degree of fall.

The detection unit 15 detects a timing at which a relatively large fluctuation occurred in the stock price of the first group and the stock price of the second group, as compared with the past transition of the stock price. The classification unit 14 may classify the text information using a classifier trained on the basis of the text information regarding the stock price of the first group and the text information regarding the stock price of the second group recorded in the past prior to the timing detected by the detection unit 15.

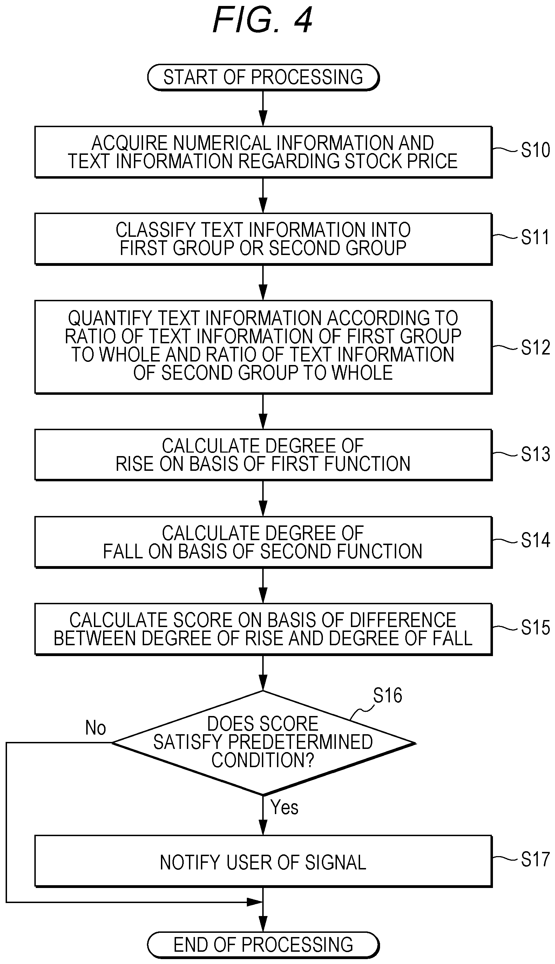

Fig. 4 is a flowchart of score calculation processing executed by the stock price analysis device 10 according to an embodiment of the present invention. The score calculation processing is processing of calculating a score that predicts the future transition of the stock price using a classifier, a first function, and a second function that have been trained in advance.

First, the stock price analysis device 10 causes the acquisition unit 11 to acquire numerical information and text information regarding a stock price (S10). Here, the numerical information may be normalized. The normalization of numerical information may be performed, for example, by converting numerical values into a range from 0 to 1. Note that it is not always necessary to normalize numerical information.

The stock price analysis device 10 causes the classification unit 14 to classify text information into text information of the first group or text information of the second group (S11). For example, the classification unit 14 may classify the text information into the text information of the first group or the text information of the second group using a preliminarily trained naive Bayes classifier. Note that the classification unit 14 may classify text information using any classifier.

The stock price analysis device 10 quantifies the text information according to the ratio of the text information of the first group to the whole and the ratio of the text information of the second group to the whole (S12). For example, in a case where N pieces (N is any natural number) of text information has been acquired, and where N1 (N1 ≤ N) pieces of text information is classified into the first group by the classification unit 14 and N2 (N2 = N - N1) pieces of information is classified into the second group, the stock price analysis device 10 may calculate the ratio of the text information of the first group to the whole using p1 = N1/N, and may calculate the ratio of the text information of the second group to the whole using p2 = N2/N.

The stock price analysis device 10 causes the first calculation unit 12a to calculate the degree of rise on the basis of the first function (S13). The degree of rise may be a value of the first function. In a case where i pieces (where i is any natural number) of numerical information is expressed as x1, x2, ..., xi, the ratio of the text information of the first group to the whole is represented as p1, and the text information of the second group to the whole is expressed as p2, the first function will be expressed as f1 (x1, x2, ..., xi, p1, p2) = a1 × x1 + a2 × x2 + ... + ai × xi + b1 × p1 + b2 × p2. Here, a1, a2, ..., ai, b1, b2 are coefficients determined by learning processing performed in advance. The function form of the first function is not limited to the above, and a nonlinear function can also be adopted.

The stock price analysis device 10 causes the second calculation unit 12b to calculate the degree of fall on the basis of the second function (S14). The degree of fall may be the value of the second function. In a case where i pieces (where i is any natural number) of numerical information is expressed as x1, x2, ..., xi, the ratio of the text information of the first group to the whole is expressed as p1, and the text information of the second group to the whole is expressed as p2, the second function will be expressed as f2 (x1, x2, ..., xi, p1, p2) = c1 × x1 + c2 × x2 + ... + ci × xi + d1 × p1 + d2 × p2. Here, c1, c2, ..., ci, d1, and d2 are coefficients determined by learning processing performed in advance. The function form of the second function is not limited to the above, and a nonlinear function can also be adopted.

The stock price analysis device 10 may calculate a value obtained by quantifying the text information for each of information sources. For example, in a case where the acquisition unit 11 has acquired K pieces of news information (K is any natural number) from the news distribution server 30, and where L pieces of reputation information (L is any natural number) have been acquired from the SNS server 40, text information may be quantified as follows. First, the classification unit 14 classifies the news information into K1 (K1 ≤ K) pieces of news information of the first group and K2 pieces (K2 = K - K1) of news information of the second group, and classifies reputation information into L1 (L1 ≤ L) pieces of reputation information of the first group and L2 (L2 = L - L1) pieces of reputation information of the second group. Next, the ratio of news information of the first group to the whole is calculated by K1/K, the ratio of news information of the second group to the whole is calculated by K2/K, and the ratio of the reputation information of the first group to the whole is calculated by L1/L, and the ratio of the reputation information of the second group to the whole is calculated by L2/L.

In a case where the value obtained by quantifying the text information is calculated for each of information sources and there are j values (j is any natural number) such as p1, p2, ..., pj, the first function is expressed as f1 (x1, x2, ..., xi, p1, p2, ..., pj) = a1 × x1 + a2 × x2 + ... + ai × xi + b1 × p1 + b2 × p2 + ... + bj × pj. Here, a1, a2, ..., ai, b1, b2, ..., bj are coefficients determined by learning processing performed in advance. The second function is f2 (x1, x2, ..., xi, p1, p2, ..., pj) = c1 × x1 + c2 × x2 + ... + ci × xi + d1 × p1 + d2 × p2 + ... + dj × pj. Here, c1, c2, ..., ci, d1, d2, ..., dj are coefficients determined by learning processing performed in advance.

The first calculation unit 12a may calculate a plurality of degrees of rise corresponding to a plurality of information sources using a plurality of first functions defined for each of the plurality of information sources. Similarly, the second calculation unit 12b may calculate a plurality of degrees of fall corresponding to a plurality of information sources using a plurality of second functions defined for each of the plurality of information sources. For example, the first function corresponding to numerical information x1, x2, ..., xi may be set as g1 (x1, x2, ..., xi) = a1 × x1 + a2 × x2 + ... + ai × xi, and the second function corresponding to the numerical information may be set as g2 (x1, x2, ..., xi) = c1 × x1 + c2 × x2 + ... + ci × xi. When the quantified value of news information is expressed as p1, p2, the first function corresponding to the news information may be set as h1 (p1, p2) = b1 × p1 + b2 × p2, and the second function corresponding to the news information may be set as h2 (p1, p2) = d1 × p1 + d2 × p2. The first function and the second function corresponding to the reputation information can be configured in a manner similar to cases of the first function and the second function corresponding to the news information.

The stock price analysis device 10 causes the third calculation unit 12c to calculate a score that predicts the future transition of the stock price on the basis of a difference between the degree of rise and the degree of fall (S15). The third calculation unit 12c may calculate the score on the basis of a difference between the value of the first function and the value of the second function, that is, f1 - f2.

In the case of calculating the score for each of a plurality of information sources, for example, the score corresponding to the numerical information may be calculated on the basis of a difference g1-g2 between the first function g1 and the second function g2 corresponding to the numerical information. Furthermore, a score corresponding to the news information may be calculated on the basis of a difference h1-h2 between the first function h1 and the second function h2 corresponding to the news information. This similarly applies to the case of calculating a score corresponding to reputation information.

The stock price analysis device 10 determines whether the calculated score satisfies a predetermined condition (S16). Here, the predetermined condition may be, for example, a condition that the score exceeds an upper threshold or falls below a lower threshold, a condition that the sign of the score is inverted, or a condition that an index value obtained as a standardized value of the score exceeds an upper threshold or falls below a lower threshold. Here, the index value obtained as a standardized value of the score may be a value obtained by subtracting the average value of the score from the score value and then dividing the result by the standard deviation of the score. In a case where the score is calculated for each of a plurality of information sources, a predetermined condition may be set for each of the plurality of scores to determine whether the condition is satisfied. When a plurality of scores has been calculated, the predetermined condition may be a condition based on a relationship between a plurality of types of scores. For example, the predetermined condition may be a condition that the magnitude relationship between the two types of scores is inverted.

In a case where the calculated score satisfies a predetermined condition (S16: Yes), the stock price analysis device 10 notifies a user of a signal (S17). Conversely, in a case where the calculated score does not satisfy the predetermined condition (S16: No), the processing is finished. This completes the score calculation processing by the stock price analysis device 10 according to the present embodiment.

With the stock price analysis device 10 according to the present embodiment, the first calculation unit 12a calculates the degree of rise in the stock price from the information regarding the stock price, the second calculation unit 12b calculates the degree of fall in the stock price from the information regarding the stock price, and then combining the calculation results to calculate a score makes it possible to read the probability of both the rise and fall in the stock price from the information regarding the stock price, enabling prediction of the future transition of the stock price.

Furthermore, it is possible to predict the transition of the future stock price on the basis of more diverse information, by quantifying text information regarding the stock price and inputting the quantified information, together with numerical information regarding the stock price, to the first function and the second function.

In addition, the future transition of the stock price can be predicted from a plurality of different viewpoints by calculating a plurality of scores corresponding to a plurality of information sources.

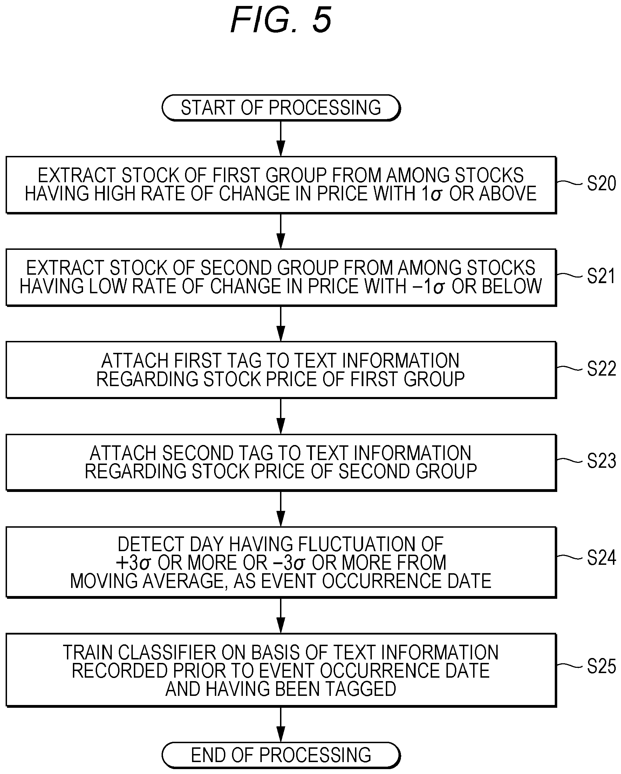

Fig. 5 is a flowchart of classifier learning processing executed by the stock price analysis device 10 according to an embodiment of the present invention. The classifier learning processing is processing in which the classifier used by the classification unit 14 is trained on the basis of text information recorded in the past.

First, the stock price analysis device 10 causes the extraction unit 13 to extract the stock of the first group from among stocks having a high rate of change in price with 1σ or above among stock prices recorded in the past (S20). Furthermore, the stock price analysis device 10 causes the extraction unit 13 to extract the stock of the second group from among stocks having a low rate of change in price with -1σ or below among stock prices recorded in the past (S21). In this manner, extracting the stock of the first group and the stock of the second group in accordance with a prescribed standard can train the classifier without human interventions, enabling more objective classification of text information. Note that the extraction of the stock of the first group and the stock of the second group need not be performed by the extraction unit 13, and may be performed on the basis of designation by the user.

The stock price analysis device 10 attaches a first tag to the text information regarding the stock price of the first group being the price of the stock of the first group (S22), and attaches a second tag to the text information regarding the stock price of the second group being the price of the stock of the second group (S23). Here, the first tag is a tag that suggests a rise in the stock price, and the second tag is a tag that suggests a fall in the stock price.

Next, the stock price analysis device 10 causes the detection unit 15 to detect a timing at which a relatively large fluctuation has occurred in the stock price of the first group and the stock price of the second group as compared with the past transition of the stock price, as an event occurrence date. Specifically, the stock price analysis device 10 specifies the day on which the stock price rose to 3σ (3 standard deviation) or more from a moving average line, as the event occurrence day, or detects the day on which the stock price fell to -3σ (-3 standard deviation) or less from the moving average line, as the event occurrence date (S24). Here, it is possible to use a moving average of any number of days, and it is allowable to use a 25-day moving average.

The stock price analysis device 10 trains the classifier on the basis of the text information regarding the stock price of the first group and the text information regarding the stock price of the second group recorded in the past prior to the event occurrence date (S25). Specifically, the classifier is trained to classify the text information with the first tag into the text information of the first group and classify the text information with the second tag into the text information of the second group. That is, the stock price analysis device 10 trains the classifier to classify the text information regarding the first group stock price recorded in the past into the text information of the first group and classify the text information regarding the stock price of the second group recorded in the past into text information of the second group. This completes learning processing of the classifier.

With the stock price analysis device 10 according to the present embodiment, it is possible to correctly evaluate an influence on the stock price suggested by text information by training the classifier so as to classify text information regarding the stock price of the first group into the text information of the first group and so as to classify text information regarding the stock price of the second group into the text information of the second group, regardless of the content of the text information.

In addition, specifying the event occurrence date by the timing when a relatively large fluctuation as compared to the past stock price transition occurred and training the classifier using the text information recorded on or before the event occurrence date will make it possible to train the classifier with the text information typically emerging prior to the event occurrence, enabling determination, with high accuracy, as to whether the text information is to be classified into the first group or the second group.

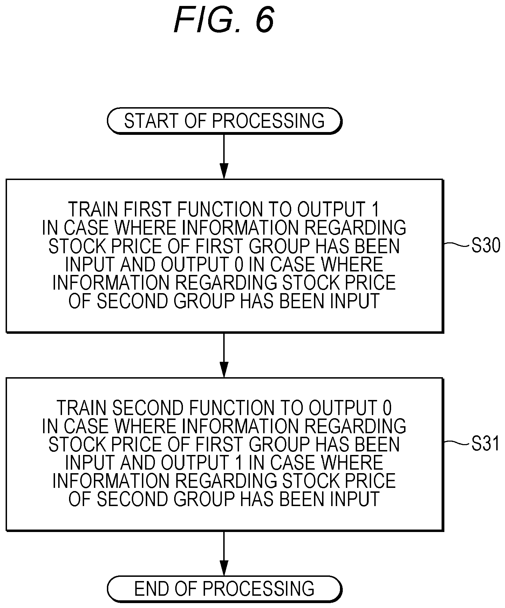

Fig. 6 is a flowchart of first function and second function learning processing executed by the stock price analysis device 10 according to an embodiment of the present invention. The learning processing of the first function and the second function is processing of training the first function and the second function used by the first calculation unit 12a and the second calculation unit 12b, respectively. Specifically, this corresponds to processing for performing linear regression analysis, including processing of determining coefficients a1, a2, ..., ai, b1, b2, etc. of the first function f1, and processing of determining coefficients c1, c2, ..., ci, d1, d2, etc. of the second function f2.

The stock price analysis device 10 trains the first function to output values different between a case where information regarding the stock price of the first group that has risen during a predetermined period has been input and a case where information regarding the stock price of the second group that has fallen during a predetermined period has been input. Specifically, the first function is trained to output 1 in a case where information regarding the stock price of the first group has been input, and output 0 in a case where information regarding the stock price of the second group has been input (S30). That is, in a case where the first function is expressed as f1 (x1, x2, ..., xi, p1, p2) = a1 × x1 + a2 × x2 + ... + ai × xi + b1 × p1 + b2 × p2, a coefficient a1, a2, ..., ai, b1, b2 will be determined by substituting x1, x2, ..., xi, p1, p2 being information regarding the stock price of the first group so as to impose a condition 1 = a1 × x1 + a2 × x2 + ... + ai × xi + b1 × p1 + b2 × p2, and substituting x1, x2, ..., xi, p1, p2 being information regarding the stock price of the second group so as to impose a condition 0 = a1 × x1 + a2 × x2 + ... + ai × xi + b1 × p1 + b2 × p2.

In addition, the stock price analysis device 10 trains the second function to output values different between a case where information regarding the stock price of the first group has been input and a case where information regarding the stock price of the second group has been input, and trains the second function to have a dependency different from a dependency of the first function with respect to the information regarding the stock price of the first group and the information regarding the stock price of the second group. The stock price analysis device 10 according to the present embodiment trains the second function to have a dependency opposite to the dependency of the first function with respect to the information regarding the stock price of the first group and the information regarding the stock price of the second group. Specifically, the second function is trained to output 0 in a case where information regarding the stock price of the first group has been input, and to output 1 in a case where information regarding the stock price of the second group has been input (S31). That is, in a case where the second function is expressed as f2 (x1, x2, ..., xi, p1, p2) = c1 × x1 + c2 × x2 + ... + ci × xi + d1 × p1 + d2 × p2, a coefficient c1, c2, ..., ci, d1, d2 will be determined by substituting x1, x2, ..., xi, p1, p2 being information regarding the stock price of the first group so as to impose a condition 0 = c1 × x1 + c2 × x2 + ... + ci × xi + d1 × p1 + d2 × p2, and substituting x1, x2, ..., xi, p1, p2 being information regarding the stock price of the second group so as to impose a condition 1 = c1 × x1 + c2 × x2 + ... + ci × xi + d1 × p1 + d2 × p2. This completes learning processing of the first function and the second function.

With the stock price analysis device 10 according to the present embodiment, the first function and the second function are trained to have opposite dependencies with respect to the information regarding the stock price of the first group and the information regarding the stock price of the second group, making it possible to evaluate the degree of rise and the degree of fall in stock prices on a common scale.

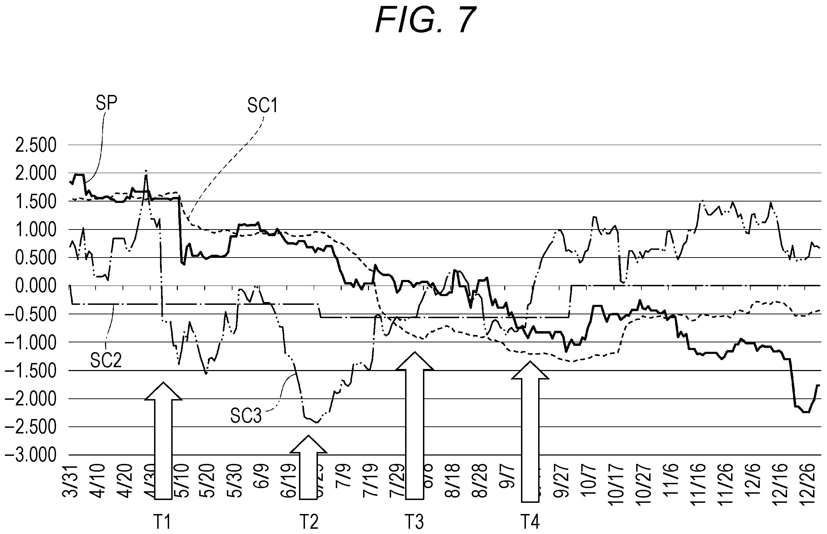

Fig. 7 is a graph indicating transitions in scores and stock prices calculated by the stock price analysis device 10 according to an embodiment of the present invention. In the figure, the vertical axis indicates score values and the normalized stock price values, and the horizontal axis indicates the date. In the graph, a stock price SP is indicated by a solid line, a first score SC1 corresponding to reputation information is indicated by a broken line, a second score SC2 corresponding to financial information is indicated by a one-dot chain line, and a third score SC3 corresponding to news information is indicated by a two-dot chain line. In addition, the timings at which the score suggests the future transition of the stock price are indicated by upward arrows, as a first timing T1, a second timing T2, a third timing T3, and a fourth timing T4.

At the first timing T1, the third score SC3 corresponding to the news information has fallen ahead of the stock price SP. Here, the second score SC2 corresponding to the reputation information has fallen substantially simultaneously with the stock price SP, while the first score SC1 corresponding to the financial information has not fluctuated during the quarter and thus has not changed. This leads to an interpretation that the stock price SP has fallen following a report of negative news information, and that the reputation information includes information of rumors of falling stock price SP, for example.

At the second timing T2, the third score SC3 corresponding to the news information has fallen prior to the fall of the first score SC1 corresponding to the financial information, and thereafter the stock price SP has fallen. This leads to an interpretation that the news information includes negative forecasts such as downward revisions in business performance, and that financial information announced by a corporation actually includes downward revisions, and the stock price SP has fallen.

At the third timing T3, the second score SC2 corresponding to the reputation information has fallen ahead of the stock price SP. This leads to an interpretation that bad rumors about the stock price SP have spread on the Internet and thereafter the stock price SP has gradually fallen.

At the fourth timing T4, the scores are recovered in the order of the third score SC3 corresponding to the news information, the first score SC1 corresponding to the financial information, and the second score SC2 corresponding to the reputation information. Thereafter, the stock price SP has also recovered. This leads to an interpretation that the news information includes positive forecasts such as upward revisions in business performance, and that financial information announced by a corporation actually includes upward revisions, and the stock price SP has actually risen gradually after spread of good rumors about the stock price SP on the Internet.

In this manner, with the stock price analysis device 10 according to the present embodiment, it is possible to calculate a score that fluctuates ahead of the stock price. In addition, it is possible to calculate a plurality of scores corresponding to a plurality of information sources and perform stock price prediction according to the characteristics of the information sources.

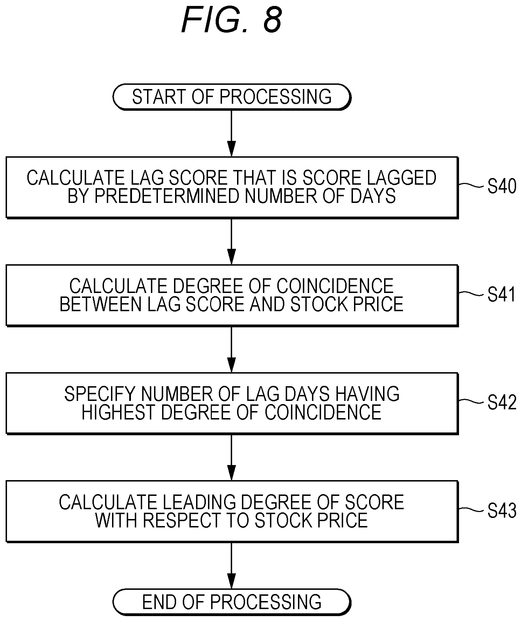

Fig. 8 is a flowchart of leading degree calculation processing executed by the stock price analysis device 10 according to an embodiment of the present invention. The leading degree calculation processing is processing of calculating a leading degree indicating how much the score precedes the stock price.

The stock price analysis device 10 calculates a lag score that is a score lagged by a predetermined number of days (S40). For example, the stock price analysis device 10 may calculate ten types of lag scores in which the score is lagged by up to 100 days in units of ten days.

Next, the stock price analysis device 10 calculates the degree of coincidence between the lag score and the stock price (S41). Here, the degree of coincidence between the lag score and the stock price may be calculated on the basis of a difference between the lag score and the normalized stock price. For example, in a case where ten types of lag scores in which the score is lagged by up to 100 days in units of ten days are calculated, the degree of coincidence with the stock price may be calculated for each of the ten types of lag scores.

The stock price analysis device 10 specifies the number of lag days having the highest degree of coincidence (S42). For example, in a case where ten types of lag scores in which the score is lagged by up to 100 days in units of ten days are calculated, the lag score with the highest degree of coincidence calculated for each of the ten types of lag scores may be specified, and the number of lag days of the specified lag score may be specified as the number of lag days with the highest degree of coincidence.

The stock price analysis device 10 causes the fourth calculation unit 12d to calculate the leading degree of a score with respect to the stock price (S43). The leading degree may be the number of lag days with the highest degree of coincidence, or may be an indexed amount of the number of lag days. This completes the leading degree calculation processing.

With the stock price analysis device 10 according to the present embodiment, calculating the leading degree makes it possible to grasp how much the score would be ahead of the stock price, and to selectively utilize the score in accordance with the investment time span.

The above-described embodiments are for facilitating understanding of the present invention and are not intended to limit the present invention. Individual elements included in the embodiment and their arrangements, materials, conditions, shapes, sizes, or the like are not limited to those illustrated, and can be altered as appropriate. In addition, the configuration illustrated in different embodiments can be partially replaced or combined with each other.

## Claims

1. A stock price analysis device (10) comprising:
an acquisition unit (11) that acquires information regarding a stock price;
a first calculation unit (12a) that calculates a future degree of rise in a stock price on a basis of a first function that is trained to output values different between a case where information regarding a stock price of a first group that has risen during a predetermined period has been input and a case where information regarding a stock price of a second group that has fallen during the predetermined period has been input;
a second calculation unit (12b) that calculates a future degree of fall in the stock price on a basis of a second function that is trained to output values different between the case where the information regarding the stock price of the first group has been input and the case where the information regarding the stock price of the second group has been input and that is trained to have a dependency different from a dependency of the first function with respect to the information regarding the stock price of the first group and the information regarding the stock price of the second group; and
a third calculation unit (12c) that combines the degree of rise and the degree of fall and outputs a score that predicts a future transition of the stock price.

2. The stock price analysis device (10) according to claim 1,
wherein the acquisition unit (11) acquires numerical information and text information regarding the stock price,
the stock price analysis device further comprises a classification unit (14) that classifies the text information obtained by the acquisition unit (11) into text information of a first group and text information of a second group using a classifier that is trained on a basis of the text information regarding the stock price of the first group and the text information regarding the stock price of the second group,
the first calculation unit (12a) calculates the degree of rise by inputting, to the first function, a value that quantifies text information on a basis of classification results from the classifier, and
the second calculation unit (12b) calculates the degree of fall by inputting, to the second function, a value that quantifies text information on the basis of the classification results from the classifier.

3. The stock price analysis device (10) according to claim 2,
wherein the classification unit (14) classifies the text information acquired by the acquisition unit (11) using the classifier that is trained to classify text information regarding the stock price of the first group recorded in the past into the text information of the first group and that is trained to classify text information regarding the stock price of the second group recorded in the past into the text information of the second group.

4. The stock price analysis device (10) according to claim 2 or 3,
wherein the classification unit (14) classifies the text information using the classifier that is trained on a basis of text information regarding the stock price of the first group and text information regarding the stock price of the second group recorded prior to a timing when a relatively large fluctuation as compared to a past stock price transition occurred, for the stock price of the first group and the stock price of the second group.

5. The stock price analysis device (10) according to any one of claims 2 to 4,
wherein the numerical information includes financial information regarding the stock price,
the text information includes at least one of news information regarding the stock price or reputation information regarding the stock price, and
the third calculation unit (12c) calculates the score that corresponds to one of the news information, the financial information, or the reputation information.
